# EUROPEAN PATENT SPECIFICATION

(11) **EP 2 103 880 B1**
(45) Date of publication and mention of the grant of the patent: **07.09.2011**
(21) Application number: 08005301.0
(22) Date of filing: 20.03.2008
(51) Int. Cl.: F24D 3/18, F24D 19/10

(54) **Heating and method for controlling the heating**
Heizung und Steuerverfahren für die Heizung
Dispositif de chauffage et procédé de contrôle du chauffage

(43) Date of publication of application: 23.09.2009
(73) Proprietor: DAIKIN INDUSTRIES, LTD., Osaka-shi, Osaka 530-8323 (JP); Daikin Europe N.V., 8400 Oostende (BE)
(72) Inventor: Aspeslagh, Bart, 9800 Deinze (BE); Ochi, Hiroki, Osaka, 591-8511 (JP); Kataoka, Hidehiko, Kusatsu Shiga, 525-8526 (JP)
(74) Representative: HOFFMANN EITLE

(56) References cited:
- EP-A2- 0 138 568
- WO-A1-2007//004962
- DE-A1- 3 429 405
- US-A- 5 081 846

## Description

### Field of the invention

The present invention relates to a heating and a method for controlling the heating. It is, however, to be understood that the present invention may also be incorporated in combined heating and cooling installations and is then implemented for controlling the installation in the heating mode. More particularly, the present invention relates to a heating comprising a heat pump, particularly an air-source heat pump, having an outdoor evaporator, a compressor, a condenser and an expansion means connected by a refrigerant piping in a cycle; a heating fluid piping passing through the condenser for exchanging a heat between the refrigerant and the heating fluid and at least a first and a second object to be heated by the heating fluid to a first set temperature and a second set temperature. A heating and a method for controlling the heating having the features in the preamble of claims 1 and 9 is known from EP-A-0 138 568. WO-A-2007/004962 discloses a heating having a heat pump with an evaporator, a compressor, a condenser and an expansion means connected by a refrigerant piping in a cycle. A heating fluid piping passing through the condenser is provided for exchanging heat between the refrigerant and the heating fluid, which serves to heat a first and a second object to a first set temperature and a second set temperature, respectively. Further disclosed is valve at least being switchable between a first position for supplying heating fluid to heat the first object and a second position supplying heating fluid to heat the second object. The valve of WO-A-2007/004962 is configured as a shunt valve for diverting the heating fluid so as to at all times satisfy a demand of the first and the second object.

### Background of the invention

In existing systems such a heating is controlled based on a set priority. That is, a user manually inputs which of the first and second object is to be served first, if both the first and the second object have a heat demand, i.e. require supply of heating fluid. Hence and independently from the amount of heat which is demanded by the priority object, the priority object is served, whereas the other object is set on hold until the demand of the priority object has been satisfied.

In case the priority is set to the domestic hot water production, there is a possibility that the indoor temperature is dropping below the level of comfort. In case the priority is set to the space room heating, there may occur discomfort in the domestic hot water production if an insufficient hot water production takes place.

### Summary of the invention

Hence, it is the object of the present invention to provide a heating and a method for controlling a heating as described in the introductory part which enables both to prevent severe temperature drops in e.g. rooms to be heated and provide sufficient heating to e.g. hot water in a hot water container at the same time being as efficient as possible.

This object is solved by a heating as defined in claim 1 and a method for controlling the heating as defined in claim 9.

Embodiments of the present invention are named in the dependent claims.

The principle idea of the present invention is to provide the heating with an adaptive control which controls the supply of heating fluid to a first and second object to be heated based on a comparison of the heating demand of the first and second object. Hence, the present invention considers both heating demands of the objects to be heated compares the demands and based on the comparison decides which of the first and second object is to be served first, i.e. supplied with heating fluid.

The heating of the present invention comprises a heat pump having an evaporator, a compressor, a condenser and a expansion means connected by a refrigerant piping in a cycle. It is to be understood that the heat pump in a combined heating and cooling installation may also be operated in a cooling mode, that is reversed compared to the heating mode. In the cooling mode, the evaporator will then serve the condenser and the condenser will serve as the evaporator of the heat pump. Furthermore, the heating of the present invention comprises a heating fluid piping passing through the condenser for exchanging heat between the refrigerant and the heating fluid as well as at least a first and a second object to be heated by the heating fluid to a fist set temperature and a second set temperature, respectively. In addition, in order to selectively supply heating fluid to heat the first object or the second object, the heating of the present invention comprises a valve which is at least switchable between a first position for supplying heating fluid to heat the first object and a second position for supplying heating fluid to heat the second object. In addition, at least two sensors are provided for detecting the first and the second actual temperature at the first and the second object, respectively. The control of the heating of the present invention is configured to, in a demand dependent mode, determine a first demand based on at least the first set temperature and the first actual temperature and a second demand based on at least the second set temperature and the second actual temperature and based on the first and second demand switches the valve to the first and the second position to either serve the first object or the second object, hence, satisfying the first or the second demand (heating demand). It is to be understood that the first demand is determined based on at least the first set temperature and the first actual temperature but other parameters may also be considered in determining the demands, such as time and temperature concurrent. If these parameters other than the said temperatures are sufficiently significant, the demand may also be determined based on these parameters only. Further, the first demand and the second demand may be determined based on at least the difference between the set temperature and the actual temperature.

The control is configured to switch the valve to the first position if the first demand is higher than the second demand and to switch the valve to the second position if the second demand is higher than the first demand. Self-evident the control is configured to switch the valve to the first position, if there is no second demand and to switch the valve into the second position, if there is no first demand. Nevertheless, even if there are a first demand and a second demand and according to this preferred embodiment, the control switches the valve so as to serve the higher demand.

As previously indicated, it is considered preferred that the first object is at least one heat emitter which is arranged in a room to be heated, wherein the heat emitter on an upstream side thereof is connected to the heating fluid piping via said valve. According to one preferred embodiment, the heat emitter comprises a floor heating loops or may entirely consist of a floor heating loops. However, also a combination of radiators and floor heating loops may form the heat emitter of the present invention.

In this embodiment it is preferred that the first actual temperature is the actual flow temperature to the heat emitter, i.e. the flow temperature of the heating fluid to the heat emitter and the first set temperature is the desired flow temperature to the heat emitter, which may be required to obtain the desired room temperature.

Moreover and as also previously indicated, the second object is water contained in a hot water container. According to one embodiment a portion of a pipe, the upstream side of which being connected to the heating fluid piping via said valve, is connected to a heat exchanger for transferring the heat from the heating fluid to the water. According to another embodiment, the portion of the pipe forms the heat exchanger and passes, e.g. in form of a coil, through the interior of the hot water container, thereby transferring the heat from the heating fluid to the water.

In this embodiment, it is preferred that the second actual temperature is the actual water temperature of the water contained in the hot water container and to be heated and the second set temperature is the desired temperature of said water.

Further and to in order to enable the user to select between the preferred demand dependent mode and a priority mode the control has an input device for selecting the mode, wherein in the priority mode a priority is manually set with respect to the first or the second object. The input device may also comprise an input element, such as a bottom, for selecting a boosting mode, in which an additional heater in the hot water container is manually activated to quickly heat up the water in the container if required.

Furthermore and as previously mentioned, the present invention also provides a method for controlling a heating as described above. The control method comprises the steps of calculating a first demand based on at least the first set temperature and the first actual temperature and a second demand based on at least the second set temperature and the second actual temperature, comparing the first and second demand and heating either the first object or the second object based on the comparison, that is to either supply heating fluid to the first object or to the second object.

The embodiments of the method of the present invention correspond to the preferred embodiments of the heating described above so that in order to avoid repetitions reference is made to the dependent claims and the above description only.

### Brief description of the drawings

Additional features and advantages of the present invention will become apparent from the detailed description of a preferred embodiment with reference to the accompanying drawings in which:
Fig. 1 is a perspective view of a room heating and cooling installation in which the present invention may be implemented;
Fig. 2 is a system diagram for schematically explaining the components of the installation shown in Fig. 1;

### Embodiment of the invention

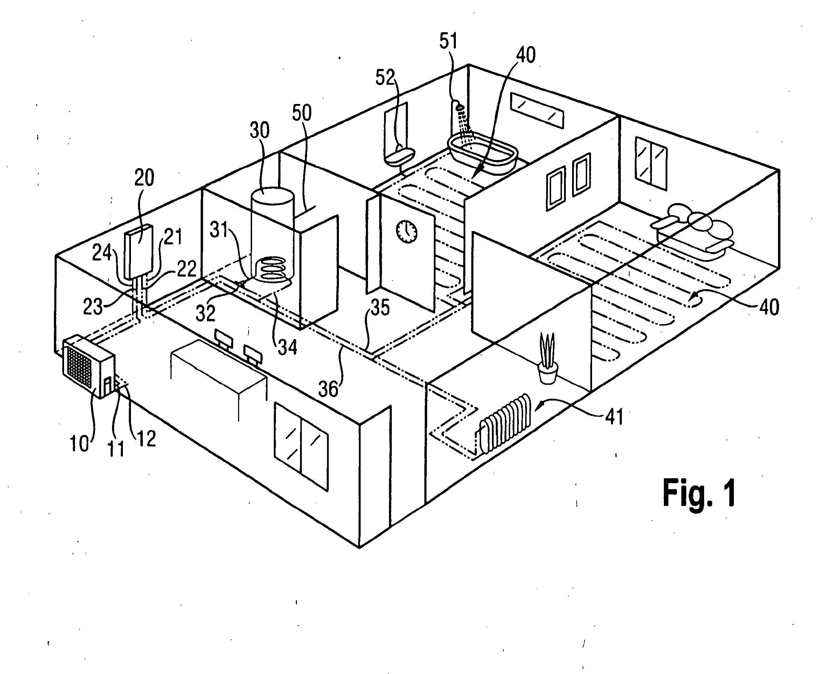

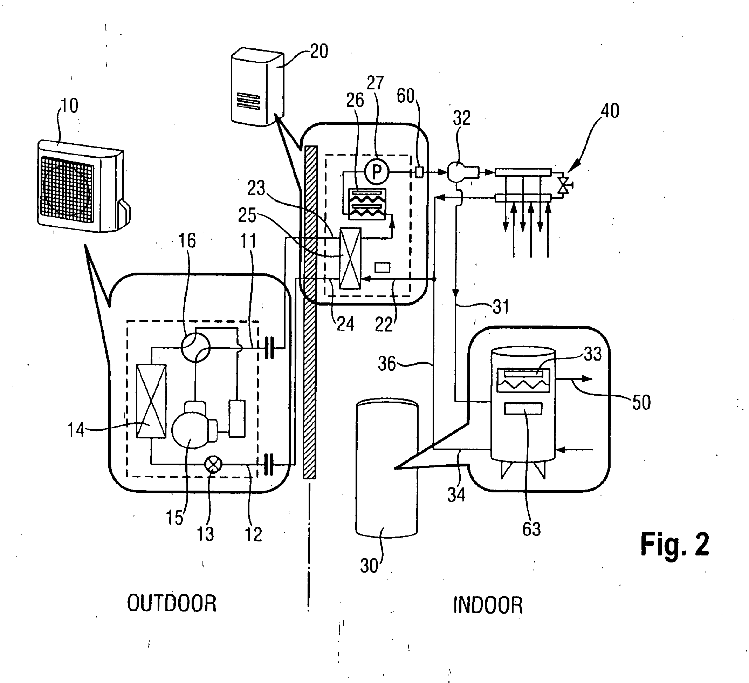

The present application will be described in the following as being implemented in an installation which is capable of heating and cooling a predetermined space (room) and heating water in a hot water container, the water via piping 50 being used for sanitary purposes like the tabs 52, the shower 51, etc. (see Fig. 1). Yet it is to be understood that the present invention may also be implemented in other installation than the one shown in Figs. 1 and 2, where appropriate.

The installation shown in Fig. 1 consists of three major components, an outdoor unit 10, an indoor unit 20 and a hot water container 30. The outdoor unit 10 is connected to a piping 11, 12 which connects the outdoor unit 10 to the indoor unit 20. The outdoor unit 10 comprises an inlet/outlet 12 and an outlet/inlet 11 for a refrigerant piping. The indoor unit 20 comprises an inlet/outlet 24 and an outlet/inlet 23 for the refrigerant piping. In addition, the indoor unit has an outlet 21 and an inlet 22 for the fluid to be circulated in the fluid circuit (depending on the mode the fluid is heating or cooling fluid). The fluid may be water or a brine solution. The piping downstream of the outlet 21 is connected via a valve 32 to a piping 31 and a piping 35. The piping 31 passes through the interior of the hot water container 30 in form of a coil (see Fig. 1) and leaves the hot water container 30 via a piping 34 connected to a piping 36 leading to the inlet 22. The piping 35 downstream of the valve 32 leads to a heat emitter 41 and/or underfloor heating loops 40 and then is refed to the indoor unit via the piping 36 and the inlet 22.

As will be appreciated, the connections 11, 12 to the outdoor unit 10 and the connections 23, 24 to the indoor unit may respectively be reversed depending on the mode in which the system is operated, i.e. the heating mode or the cooling mode.

As shown in Fig. 2 the outdoor unit comprises an evaporator and/or condenser 14, a four-way valve 16, a compressor 15 and an expansion device 13, which is may be an electric valve or a capillary. The indoor unit 20 inter alia comprises a condenser/evaporator 25. These components form a heat pump. Hence, the evaporator/condenser 14, the compressor 15, the condenser/evaporator 25 and the expansion means 13 are connected in this order in a cycle or loop by means of a refrigerant piping 17, 18. A refrigerant is circulated by means of the compressor 15 in the refrigerant piping 17, 18. In the heating mode the refrigerant circulates clockwise in Fig. 2. Hence, the refrigerant leaving the condenser 25 and having a first temperature T₁ upstream of the expansion means 13 passes the expansion means 13, the pressure being reduced. Afterwards, the refrigerant passes the evaporator 14 and is evaporated having a second temperature T₂ downstream of the evaporator 14 higher than the first temperature. After leaving the evaporator 14, the refrigerant passes through the compressor, the pressure being increased. Finally, the refrigerant is again condensed to the first temperature T₁ in the condenser 25, wherein the heat from the refrigerant is transferred to the water or brine solution (fluid) in the piping connected to the indoor unit via the connections (inlet 22 and outlet 21.

In the cooling mode, this process is reversed, wherein the component 14 then serves as condenser and the component 25 as evaporator. The refrigerant then circulates counter-clockwise in Fig. 2.

The indoor unit 20 further comprises a pump 27 and a backup heater 26. The pump serves for circulating the fluid (heating or cooling fluid) in the fluid circuit (21, 31, 34, 35, 36, 22). The purpose of the backup heater 26 is to cope with situations in which the heat pump described above is not capable to satisfy the entire heating demand (at very low temperatures, e.g. below -10°C). This backup heater 26 in some cases may also be omitted.

In the heating mode the fluid (heating fluid) enters the indoor unit 20 through the inlet 22, passes the condenser 25, wherein heat is transferred from the refrigerant to the fluid, then flows through the backup heater 26 in which the fluid may be additionally heated if necessary and subsequently passes the pump 27 which circulates the fluid in the fluid circuit. Afterwards and by controlling the valve 32 the fluid is either supplied to the floor heating loops 40 and the heat emitter 41 (see Fig. 1) or alternatively to the hot water container piping (31, 34). In the latter case, the fluid may enter the hot water container 30 by means of the piping 31 passing the heating coil inside the hot water container 30 thereby transferring the heat from the fluid to the water contained in the hot water container 30 and subsequently being reefed to the circuit by the pipings 34 and 36 finally being reintroduced into the indoor unit via the inlet 22. Similar, the fluid may also be supplied to the floor heating loops 40 as a heat emitter or the radiator 41 shown in Fig. 1 and subsequently be reintroduced in to the indoor unit via the inlet 22. In case the temperature of the fluid is not sufficient to heat the hot water in the hot water container an additional (booster) heater 33 may be provided in the hot water conatiner.

As previously mentioned, the circulation of the fluid in the cooling mode is the same but the cycle of the heat pump (flow direction of the refrigerant) is reversed.

Moreover, the system comprises a temperature sensor 60 which detects the temperature of the heating fluid leaving the indoor unit which, in the following, is considered as the actual flow temperature of the heating fluid. An additional temperature sensor 63 is provided to detect the temperature of the hot water in the hot water container 30.

In the following, the control of the embodiment of the present invention is explained.

An input device (not shown) which in general will be arranged in or on the indoor unit is used to input a desired flow temperature (first set temperature) of the heating fluid to the heat emitters 40, 41 and the desired water temperature in the hot water container 30 (second set temperature).

Alternatively, the flow temperature may also be adapted automatically based on the outdoor temperature (ambient temperature) and/or the room temperature in the room to be heated. That is, if the outdoor temperature decreases the flow temperature is increased and vice versa and/or if the flow temperature is too high for the room to be heated resulting in a high cycling rate between supply and non-supply of heating fluid to the heat emitter the flow temperature is decreased and vice versa.

In operation, the control via the sensors 60, 63 detects the flow temperature of the heating fluid leaving the indoor unit as a first actual temperature and the temperature of the hot water in the hot water container 30 as a second actual temperature.

Based on the first set and second set temperature and the first and second actual temperature the control determines a first demand of the heat emitters 40, 41 and a second demand of the hot water container 30. This calculation or determination may include the difference between the first set and the first actual temperature and the difference between the second set and actual temperature. Also other parameters such as may influence the result of the first and the second demand. These parameters may be selected from the group of field settings which can be selected by the installer.

If only the heat emitters 40, 41 or the hot water container 30 demand heat, i.e. that the heating fluid is supplied to either the heat emitters 40, 41 or the hot water container 30, this demand is satisfied. If both the heat emitters 40, 41 and the hot water container 30 demand heat, the control compares the first and the second demand and depending on which demand is higher serves the heat emitters 40, 41 or the hot water container 30. I.e. if the first demand is higher, the valve 32 switches to the first position supplying heating fluid to the heat emitters 40, 41 via the piping 35. In case the second demand is higher than the first demand, the valve 32 switches to the second position supplying heating fluid via the piping 31 to the hot water container 30 passing the heating coil inside the hot water container 30 being refed via the piping 32 and 36 to the indoor unit, whereby the hot water in the hot water container 30 is heated by transfer of heat from the heating fluid flowing through the heating coil to the water in the container.

If a user selects a priority mode via the input device (not shown) of the described heating, the control changes from the above described demand dependent mode to a priority mode, wherein the user has to set a priority, either for heating the rooms, i.e. supplying heating fluid to the heat emitters 40, 41 or the hot water in the hot water container 30, i.e. supplying heating fluid to the hot water container 30.

In addition, the system may comprise a button to select a "boosting mode" which enables to activate the additional heater 33 in the hot water container 30 to quickly heat up the water in the hot water container to quickly obtain the desired temperature (second set temperature). This additional heater 33 may also be activated by means of the control in the demand dependent mode if the first demand is higher than the second demand and the heating fluid is supplied to the heat emitters 40, 41 rather than to the hot water container 30 so as to concurrently obtain the desired water temperature in the hot water container 30 if the actual temperature measured by the sensor 63 drops below a predetermined value lower than the desired temperature of the hot water in the container (second set temperature).

Although the present invention has been described with respect to a combined heating and cooling installation, the present invention may also be applied to a heating without the cooling capability. In addition, the present invention has been described with respect to heat emitters 40, 41 and a hot water container 30 as first and second object. It is, however, to be understood that the present invention may also be implemented to heat other objects than the above described.

## Claims

1. A heating comprising:
a heat pump having an evaporator (14), a compressor (15), a condenser (25) and an expansion means (13) connected by a refrigerant piping in a cycle;
a heating fluid piping passing through the condenser (25) for exchanging heat between the refrigerant and the heating fluid;
at least a first (40, 41) and a second object to be heated by the heating fluid to a first set temperature and a second set temperature, respectively,
a valve (32) at least being switchable between a first position for supplying heating fluid to heat the first object (40, 41) and a second position for supplying heating fluid to heat the second object,
at least two sensors (60, 63) for detecting the first and second actual temperature at the first and second object, respectively, and
a control configured to, in a demand dependent mode, determine a first demand based on at least the first set temperature and the first actual temperature and a second demand based on at least the second set temperature and the second actual temperature and configured to switch the valve to the first position and the second position based on a comparison of the first and second demand so as to heat either the first object (40, 41) or the second object based on the comparison, **characterized in that**
the control is configured to switch the valve (32) in case of a first demand and a second demand to the first position if the first demand is higher than second demand and to switch the valve to the second position if the second demand is higher than first demand.

2. The heating as set forth in claim 1, wherein the first object is at least one heat emitter (40, 41) which is arranged in a room to be heated, the heat emitter on an upstream side thereof being connected to the heating fluid piping via said valve (32).

3. The heating as set forth in claim 2, wherein the heat emitter comprises floor heating loops (40).

4. The heating as set forth in claim 2 or 3, wherein the first actual temperature is the actual flow temperature (Tc) to the heat emitter (40, 41) and the first set temperature is the desired flow temperature to said heat emitter.

5. The heating as set forth in any one of the preceding claims, wherein the second object is water contained in a hot water container (30), wherein a portion of a pipe, the upstream side of which being connected to the heating fluid piping via said valve (32), is connected to a heat exchanger for transferring the heat to the water or forms the heat exchanger passing through the interior of the hot water container (30).

6. The heating as set forth in claim 5, wherein the second actual temperature is the actual water temperature of the water contained in the hot water container (30) and to be heated and the second set temperature is the desired temperature of said water.

7. The heating as set forth in any one of the preceding claims, wherein the control has an input device for selecting between the demand dependent mode and a priority mode in which a priority is manually set with respect to the first or the second object.

8. A method for controlling a heating comprising:
a heat pump having an evaporator (14), a compressor (15), a condenser (25) and an expansion means (13) connected by a refrigerant piping in a cycle;
a heating fluid piping passing through the condenser for exchanging heat between the refrigerant and the heating fluid;
at least a first (40, 41) and a second object to be heated by the heat of heating fluid to a first set temperature and a second set temperature, respectively, and
detecting the first and second actual temperature of the first and second object, respectively,
calculating a first demand based on at least the first set temperature and the first actual temperature and a second demand based on at least the second set temperature and the second actual temperature,
comparing the first and second demand and
heating either the first object (40, 41) or the second object based on the comparison, **characterized in that**
the first object (40, 41) is heated when there is a first demand and a second demand and the first demand is higher than second demand and the second object is heated when there is a first demand and a second demand and the second demand is higher than first demand.

9. The method as set forth in claim 8, wherein the first object is heat emitter (40, 41) arranged in a room to be heated and the first actual temperature is the actual flow temperature to the heat emitter in said room and the first set temperature is the desired flow temperature to said heat emitter.

10. The method as set forth in any one of claims 8 to 9, wherein the second object is water contained in a hot water container (30), the second actual temperature being the actual water temperature of the water contained in the hot water container (30) and to be heated and the second set temperature is the desired temperature of said water.

## Patentansprüche

1. Heizung mit:
einer Heizpumpe mit einem Verdampfer (14), einem Kompressor (15), einem Kondensator (25) und einer Expansionseinrichtung (13), die durch eine Kühlleitung in einem Kreislauf verbunden sind,
einer Heizflüssigkeitsleitung, die durch den Kondensator hindurchgeht, um Wärme zwischen dem Kühlmittel und der Heizflüssigkeit auszutauschen,
wenigstens einem ersten (40, 41) und einem zweiten Objekt, die von der Heizflüssigkeit jeweils auf eine erste eingestellte Temperatur und eine zweite eingestellte Temperatur zu heizen sind,
einem Ventil (32), das wenigstens zwischen einer ersten Position zum Zuführen von Heizflüssigkeit, um das erste Objekt (40, 41) zu heizen, und einer zweiten Position zum Zuführen von Heizflüssigkeit, um das zweite Objekt zu heizen, schaltbar ist,
wenigstens zwei Sensoren (60, 63) zum Detektieren der ersten und zweiten gegenwärtigen Temperatur jeweils beim ersten und zweiten Objekt und
einer Regelungseinrichtung, die dafür konfiguriert ist, in einem bedarfsabhängigen Modus einen ersten Bedarf aufgrund wenigstens der ersten eingestellten Temperatur und der ersten gegenwärtigen Temperatur und einen zweiten Bedarf aufgrund wenigstens der zweiten eingestellten Temperatur und der zweiten gegenwärtigen Temperatur zu bestimmen, und die dafür konfiguriert ist, das Ventil in die erste Position und die zweite Position aufgrund eines Vergleichs des ersten und zweiten Bedarfs zu schalten, um entweder das erste Objekt (40, 41) oder das zweite Objekt zu heizen, **dadurch gekennzeichnet, dass**
die Regelungseinrichtung so konfiguriert ist, dass sie das Ventil (32) im Fall eines ersten Bedarfs und eines zweiten Bedarfs zu der ersten Position schaltet, wenn der erste Bedarf höher ist als der zweite Bedarf, und dass sie das Ventil zu der zweiten Position schaltet, wenn der zweite Bedarf höher ist als der erste Bedarf.

2. Heizung nach Anspruch 1, bei der das erste Objekt wenigstens ein Heizkörper (40, 41) ist, der in einem zu heizenden Raum angeordnet ist, wobei der Heizkörper auf einer ihm vorgelagerten Seite mit der Heizflüssigkeitsleitung über das Ventil (32) verbunden ist.

3. Heizung nach Anspruch 2, bei welcher der Heizkörper Fußbodenheizschlaufen (40) aufweist.

4. Heizung nach Anspruch 2 oder 3, bei der die erste gegenwärtige Temperatur die gegenwärtige Flusstemperatur (TC) zu dem Heizkörper (40, 41) hin und die erste eingestellte Temperatur die gewünschte Flusstemperatur zu dem Heizkörper hin ist.

5. Heizung nach einem der vorherigen Ansprüche, bei der das zweite Objekt Wasser ist, das in einem Warmwasserbehälter (30) enthalten ist, wobei ein Abschnitt eines Rohrs, dessen vorgelagerte Seite mit der Heizflüssigkeitsleitung über das Ventil (32) verbunden ist, mit einem Wärmetauscher zum Übertragen von Wärme an das Wasser verbunden ist oder aber den Wärmetauscher bildet, indem er durch das Innere des Warmwasserbehälters (30) hindurchgeht.

6. Heizung nach Anspruch 5, bei der die zweite gegenwärtige Temperatur die gegenwärtige Wassertemperatur des Wassers ist, das in dem Warmwasserbehälter (30) enthalten und zu heizen ist, und die zweite eingestellte Temperatur die gewünschte Temperatur dieses Wassers ist.

7. Heizung nach einem der vorherigen Ansprüche, bei der die Regelungseinrichtung eine Eingabeeinrichtung zum Wählen zwischen einem bedarfsabhängigen Modus und einem Prioritätsmodus, bei dem manuell eine Priorität bezüglich des ersten oder zweiten Objekts festgelegt wird, aufweist.

8. Verfahren zum Regeln einer Heizung mit:
einer Heizpumpe mit einem Verdampfer (14), einem Kompressor (15), einem Kondensator (25) und einer Expansionseinrichtung (13), die durch eine Kühlleitung in einem Kreislauf verbunden sind,
einer Heizflüssigkeitsleitung, die durch den Kondensator hindurchgeht, um Wärme zwischen dem Kühlmittel und der Heizflüssigkeit auszutauschen,
wenigstens einem ersten (40, 41) und einem zweiten Objekt, die durch die Wärme der Heizflüssigkeit jeweils auf eine erste eingestellte Temperatur und eine zweite eingestellte Temperatur zu heizen sind, und
dem Detektieren der ersten und zweiten gegenwärtigen Temperatur jeweils des ersten und zweiten Objekts,
dem Berechnen eines ersten Bedarfs auf der Basis von wenigstens der ersten eingestellten Temperatur und der ersten gegenwärtigen Temperatur und eines zweiten Bedarfs auf der Basis von wenigstens der zweiten eingestellten Temperatur und der zweiten gegenwärtigen Temperatur,
dem Vergleichen des ersten und zweiten Bedarfs und
dem Heizen entweder des ersten Objekts (40, 41) oder des zweiten Objekts aufgrund des Vergleichs, **dadurch gekennzeichnet, dass**
das erste Objekt (40, 41) geheizt wird, wenn es einen ersten Bedarf und einen zweiten Bedarf gibt und der erste Bedarf höher ist als der zweite Bedarf, und dass das zweite Objekt geheizt wird, wenn es einen ersten Bedarf und einen zweiten Bedarf gibt und der zweite Bedarf höher ist als der erste Bedarf.

9. Verfahren nach Anspruch 8, bei dem das erste Objekt ein Heizkörper (40, 41) ist, der in einem zu heizenden Raum angeordnet ist, die erste gegenwärtige Temperatur die gegenwärtige Flusstemperatur zu dem Heizkörper in dem Raum hin ist und die erste eingestellte Temperatur die gewünschte Flusstemperatur zu dem Heizkörper hin ist.

10. Verfahren nach einem der Ansprüche 8 bis 9, bei dem das zweite Objekt das Wasser ist, das in einem Warmwasserbehälter (30) enthalten ist, wobei die zweite gegenwärtige Temperatur die gegenwärtige Wassertemperatur des im Warmwasserbehälter (30) enthaltenen und zu heizenden Wassers und die zweite eingestellte Temperatur die gewünschte Temperatur für dieses Wasser ist.

## Revendications

1. Chauffage comprenant :
une pompe à chaleur ayant un évaporateur (14), un compresseur (15), un condenseur (25) et un moyen de dilatation (13) reliés par une tuyauterie de frigorigène dans un cycle ;
une tuyauterie de fluide chauffant passant à travers le condenseur (25) pour échanger de la chaleur entre le frigorigène et le fluide chauffant ;
au moins un premier (40, 41) et un deuxième objet à chauffer par le fluide chauffant à une première température réglée et à une deuxième température réglée, respectivement,
une soupape (32) pouvant au moins basculer entre une première position pour alimenter le premier objet (40, 41) en fluide chauffant et une deuxième position pour alimenter le deuxième objet en fluide chauffant,
au moins deux capteurs (60, 63) pour détecter la première et la deuxième température effective au niveau du premier objet et du deuxième objet, respectivement, et
une commande configurée pour déterminer, en mode dépendant d'une demande, une première demande sur la base d'au moins la première température réglée et la première température effective et une deuxième demande sur la base d'au moins la deuxième température réglée et la deuxième température effective et configurée pour faire basculer la soupape à la première position et la deuxième position sur la base d'une comparaison de la première et de la deuxième demande afin de chauffer soit le premier objet (40, 41) soit le deuxième objet sur la base de la comparaison, **caractérisé en ce que**
la commande est configurée pour faire basculer la soupape (32) dans le cas d'une première demande et d'une deuxième demande à la première position si la première demande est supérieure à la deuxième demande et pour faire basculer la soupape à la deuxième position si la deuxième demande est supérieure à la première demande.

2. Chauffage selon la revendication 1, dans lequel le premier objet est au moins un émetteur de chaleur (40, 41) qui est disposé dans une chambre devant être chauffée, l'émetteur de chaleur sur un côté en amont de celle-ci étant relié à la tuyauterie de fluide chauffant via ladite soupape (32).

3. Chauffage selon la revendication 2, dans lequel l'émetteur de chaleur comprend des boucles (40) de chauffage par le sol.

4. Chauffage selon la revendication 2 ou 3, dans lequel la première température effective est la température d'écoulement effective (Tc) à l'émetteur de chaleur (40, 41) et la première température réglée est la température d'écoulement souhaitée audit émetteur de chaleur.

5. Chauffage selon l'une quelconque des revendications précédentes, dans lequel le deuxième objet est de l'eau contenue dans un réservoir (30) d'eau chaude, dans lequel une partie d'un tuyau, dont le côté amont, étant relié à la tuyauterie de fluide chauffant via ladite soupape (32), est relié à un échangeur de chaleur pour transférer la chaleur à l'eau ou forme l'échangeur de chaleur en passant à travers l'intérieur du réservoir (30) d'eau chaude.

6. Chauffage selon la revendication 5, dans lequel la deuxième température effective est la température effective de l'eau contenue dans le réservoir (30) d'eau chaude et l'eau à chauffer et la deuxième température réglée est la température souhaitée de ladite eau.

7. Chauffage selon l'une quelconque des revendications précédentes, dans lequel la commande a un dispositif d'entrée pour choisir entre le mode dépendant d'une demande et un mode de priorité dans lequel une priorité est réglée manuellement par rapport au premier ou au deuxième objet.

8. Procédé destiné à commander un chauffage comprenant :
une pompe à chaleur ayant un évaporateur (14), un compresseur (15), un condenseur (25) et un moyen de dilatation (13) reliés par une tuyauterie de frigorigène dans un cycle ;
une tuyauterie de fluide chauffant passant à travers le condenseur pour échanger de la chaleur entre le frigorigène et le fluide chauffant ;
au moins un premier (40, 41) et un deuxième objet à chauffer par la chaleur du fluide chauffant à une première température réglée et à une deuxième température réglée, respectivement, et
la détection de la première et de la deuxième température effective du premier et du deuxième objet, respectivement,
le calcul d'une première demande sur la base d'au moins la première température réglée et la première température effective et une deuxième demande sur la base d'au moins la deuxième température réglée et la deuxième température effective,
la comparaison de la première et de la deuxième demande, et
le chauffage soit du premier objet (40, 41) soit du deuxième objet sur la base de la comparaison, **caractérisé en ce que**
le premier objet (40, 41) est chauffé lorsqu'il y a une première demande et une deuxième demande et la première demande est supérieure à la demande deuxième et le deuxième objet est chauffé lorsqu'il y a une première demande et une deuxième demande et la deuxième demande est supérieure à la première demande.

9. Chauffage selon la revendication 8, dans lequel le premier objet est un émetteur de chaleur (40, 41) disposé dans une chambre devant être chauffée et la première température effective est la température d'écoulement effective à l'émetteur de chaleur dans ladite chambre et la première température réglée est la température d'écoulement souhaitée audit émetteur de chaleur.

10. Procédé selon l'une quelconque des revendications 8 à 9, dans lequel le deuxième objet est de l'eau contenue dans un réservoir (30) d'eau chaude, la deuxième température effective étant la température effective de l'eau contenue dans le réservoir (30) d'eau chaude et l'eau à chauffer et la deuxième température réglée est la température souhaitée de ladite eau.
